# EUROPEAN PATENT APPLICATION

(11) **EP 4 745 616 A1**
(43) Date of publication of application: **20.05.2026**
(21) Application number: 24213396.5
(22) Date of filing: 15.11.2024
(51) Int. Cl.: G01S 7/35, G01S 13/34

(54) **FMCW RADAR**

(71) Applicant: NXP B.V., 5656 AG Eindhoven (NL)
(72) Inventor: Janssen,, Erwin Johannes Gerardus, 5656 AG Eindhoven (NL); Brekelmans, Johannes Hubertus Antonius, 5656 AG Eindhoven (NL)
(74) Representative: Hardingham, Christopher Mark

(57) **Abstract**

A frequency-modulated continuous-wave (FMCW) radar system comprising: a transmitter circuit for transmitting FMCW chirps at a chirp frequency; a receiver circuit with first/second receiver-output-terminals, the receiver circuit comprising: a filter circuit with first/second filter-output-terminals; an ADC comprising a processing-block with first/second processing-block-input/output-terminals; and a switching circuit for selectively putting the receiver circuit into a first configuration and second configuration at a switching frequency based on the chirp frequency. In the first configuration: the first filter-output-terminal is connected to the first processing-block-input-terminal; the second filter-output-terminal is connected to the second processing-block-input-terminal; the first processing-block-output-terminal is connected to the first receiver-output-terminal; and the second processing-block-output-terminal is connected to the second receiver-output-terminal. In the second configuration: the first filter-output-terminal is connected to the second processing-block-input-terminal; the second filter-output-terminal is connected to the first processing-block-input-terminal; the first processing-block-output-terminal is connected to the second receiver-output-terminal; and the second processing-block-output-terminal is connected to the first receiver-output-terminal.

## Description

### Field

The present disclosure relates to radar systems. In particular, to frequency modulated continuous wave radar systems.

### Summary

According to a first aspect of the present disclosure there is provided a frequency modulated continuous wave, FMCW, radar system comprising:
a transmitter circuit, configured to transmit FMCW chirps at a chirp frequency;
a receiver circuit with first and second receiver output terminals, the receiver circuit comprising:
   a filter circuit with first and second filter output terminals;
   an ADC comprising a processing block with first and second processing block input terminals, and with first and second processing block output terminals; and
a switching circuit operable to selectively put the receiver circuit in one of a first configuration and a second configuration, wherein:
   when the receiver circuit is in the first configuration:
      the first filter output terminal is connected to the first processing block input terminal;
      the second filter output terminal is connected to the second processing block input terminal;
      the first processing block output terminal is connected to the first receiver output terminal; and
      the second processing block output terminal is connected to the second receiver output terminal;
   when the receiver circuit is in the second configuration:
      the first filter output terminal is connected to the second processing block input terminal;
      the second filter output terminal is connected to the first processing block input terminal;
      the first processing block output terminal is connected to the second receiver output terminal; and
      the second processing block output terminal is connected to the first receiver output terminal; and
   the switching circuit is configured to set the configuration of the receiver circuit at a switching frequency, wherein the switching frequency is based on the chirp frequency.

In one or more embodiments the switching circuit is configured to alternately put the receiver circuit in the first configuration and the second configuration at the switching frequency.

In one or more embodiments the switching circuit is configured to alternately put the receiver circuit in the first configuration and the second configuration at a multiple of the switching frequency.

In one or more embodiments the switching circuit is configured to randomly put the receiver circuit in one of the first configuration and the second configuration at the switching frequency.

In one or more embodiments the switching circuit is configured to pseudo-randomly put the receiver circuit in one of the first configuration and the second configuration at the switching frequency.

In one or more embodiments the transmission apparatus comprises a timing engine configured to define the chirp frequency of the transmitter circuit.

In one or more embodiments the timing engine is also configured to provide a timing signal that is usable by the switching circuit to selectively put the receiver circuit in one of the first configuration and the second configuration at the switching frequency.

In one or more embodiments the switching frequency is equal to the chirp frequency.

In one or more embodiments the switching frequency is a multiple of the chirp frequency.

In one or more embodiments the switching circuit is configured to selectively put the receiver in one of the first configuration and the second configuration during a reset phase of the transmitter circuit.

In one or more embodiments the FMCW radar system further comprises a voltage-controlled oscillator, VCO, configured to generate the FMCW chirps.

In one or more embodiments the timing engine is configured to define an acquisition phase and the reset phase of the transmitter circuit, such that:
during the acquisition phase, the VCO may be configured to increase the frequency of an output signal from a first frequency to a second frequency; and
during the reset phase, the VCO may be configured to decrease the frequency of the output signal from the second frequency to the first frequency.

In one or more embodiments the FMCW chirp is defined by the output signal over the course of one acquisition phase and one reset phase.

In one or more embodiments the processing block comprises one or more of: an amplifier circuit; one or more input-stages; and a loop filter.

According to a second aspect of the present disclosure there is provided a method for operating a frequency modulated continuous wave, FMCW, radar system, the FMCW radar system comprising:
a transmitter circuit, configured to transmit FMCW chirps at a chirp frequency;
a receiver circuit with first and second receiver output terminals, the receiver circuit comprising:
   a filter circuit with first and second filter output terminals;
   an ADC comprising a processing block with first and second processing block input terminals, and with first and second processing block output terminals;
   the method comprising:
   selectively putting the receiver circuit in one of a first configuration and a second configuration at a switching frequency, wherein the switching frequency is based on the chirp frequency, wherein:
   when the receiver circuit is put in the first configuration, the method comprises:
      connecting the first filter output terminal to the first processing block input terminal;
      connecting the second filter output terminal the second processing block input terminal;
      connecting the first processing block output terminal to the first receiver output terminal; and
      connecting the second processing block output terminal the second receiver output terminal;
   when the receiver circuit is put in the second configuration, the method comprises:
      connecting the first filter output terminal the second processing block input terminal;
      connecting the second filter output terminal the first processing block input terminal;
      connecting the first processing block output terminal the second receiver output terminal; and
      connecting the second processing block output terminal the first receiver output terminal.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows an example FMCW radar system;
Figure 2 shows the impact of the ADC flicker noise on a 2-dimensional (2D) distance-velocity fast-Fourier transform (FFT) for a case with relatively high flicker noise;
Figure 3 shows the impact of the ADC flicker noise on a 2-dimensional (2D) distance-velocity fast-Fourier transform (FFT) for a case with relatively low flicker noise;
Figure 4 shows an FMCW radar system according to an embodiment of the present disclosure;
Figure 5 shows the impact on a 2D distance-velocity FFT after processing with the slow-time chopping technique, according to an embodiment of the present disclosure;
Figure 6 shows the impact on a 2D distance-velocity FFT after processing with the slow-time randomisation technique, according to an embodiment of the present disclosure; and
Figure 7 shows a method for operating a FMCW radar system, according to an embodiment of the present disclosure.

### Detailed Description

In a frequency modulated continuous wave (FMCW) radar receiver, a fluctuating direct current (DC) offset is considered to be a problem, in particular because it can reduce the signal-noise ratio (SNR) at low distance & low velocity. The main underlying mechanism responsible for this DC offset is flicker noise emerging from active devices.

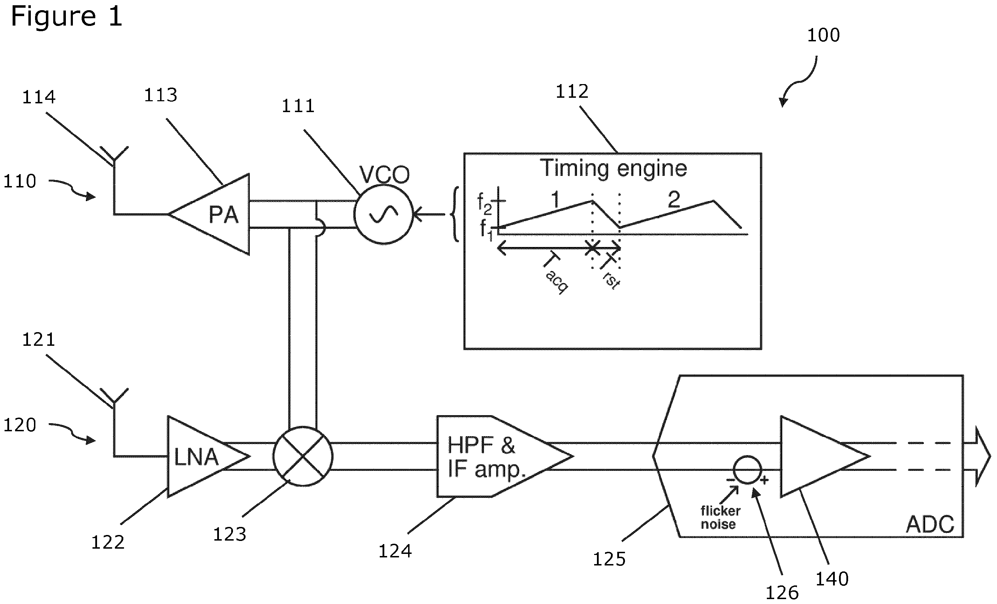

Figure 1 shows an example FMCW radar system 100. The FMCW radar system 100 is composed of a transmitter circuit 110 and a receiver circuit 120, which are used for sending and receiving FMCW chirps respectively. In this example, the FMCW chirps are generated by a voltage-controlled oscillator (VCO) 111 in the transmitter circuit 110, which is controlled by a timing engine 112. In other examples, the FMCW chirps may be generated with another device which is suitable for generating signals at varying frequencies. The FMCW chirps are then amplified by a power amplifier (PA) 113 and transmitted by a transmit antenna 114.

In the FMCW radar receiver circuit 120, reflections of the transmitted FMCW (hereinafter named the received signals) are subsequently received by a receiver antenna 121. The received signals are then processed by a low-noise amplifier (LNA) 122, a mixer 123, and a filter circuit 124 (shown in the figure as HPF & IF amp) to provide the frequency selection that ensures sufficient SNR of the signal at the input of an analogue-to-digital converter (ADC) 125. The ADC 125 may have a plurality of stages, such as 3 stages.

In Figure 1, only the first (input) stage of a sigma-delta ADC with a loop filter is shown. It will be understood that different types of ADC may be used, such as a successive approximation ADC, a pipelined ADC or a flash ADC. A typical loop filter for a sigma-delta may have a plurality of stages which may each be built around an amplifier. The number of loop filter stages associates with the order of the signa-delta converter. Each amplifier in turn may consist of multiple stages. In most cases, the first amplifier of the loop filter (shown in Figure 1 as amplifier 140) determines the overall noise of the ADC. In examples wherein the first amplifier is built with a plurality of stages, the first stages of the amplifier usually dominate the noise contribution of the ADC.

In examples which use successive approximation ADCs, the flicker noise is typically generated by a comparator circuit instead of an amplifier circuit. Although the following embodiments are described in relation to a sigma-delta ADC with an amplifier, it will be understood that the present disclosure applies *mutatis mutandis* to a successive approximation ADC with a comparator, or indeed to the other ADC types mentioned above.

To generalise, the majority of the flicker noise in an ADC can be generated by a processing block, wherein the processing block may include, for example, one or more amplifiers, amplifier circuits, active devices, input stages, comparators or any other components which contribute to flicker noise.

The filter circuit 124 includes one or more filters and baseband amplifiers. The ADC 125 digitises the received signals for further signal processing by a DSP (not shown).

In this example, the timing engine 112 defines an acquisition phase (Tacq) and a reset phase (Trst) of the transmitter circuit 110. During the acquisition phase Tacq, the transmitter circuit 110 is configured to change the frequency of an output signal from a first frequency (f1) to a second frequency (f2) and during the reset phase, the transmitter circuit 110 is configured to change the frequency of the output signal from the second frequency f2 to the first frequency f1. The change is not instantaneous. That is, the transmitter circuit 110 is configured to gradually change the frequency of the output signals between the first frequency f1 and the second frequency f2. In this example, the second frequency f2 is greater than the first frequency f1. As such, during the acquisition phase Tacq, the VCO 111 is configured to increase the frequency of an output signal linearly in time from a first frequency (f1) to a second frequency (f2). During the reset phase Trst, the VCO 111 is configured to decrease the frequency of the output signal from the second frequency f2 to the first frequency f1. An FMCW chirp is defined by the output signal over the course of one acquisition phase Tacq and one reset phase Trst. A chirp frequency is defined by the frequency of chirps generated. In this example, the acquisition phase Tacq is longer than the reset phase Trst. In this example, the receiver circuit 120 is configured to only use the received signals that correspond to the acquisition phase Tacq when calculating the distance to and / or velocity of a detected object. In this way, the receiver circuit 120 is effectively inactive when processing signals that correspond to the reset phase Trst.

In the overall receiver circuit 120, the ADC 125 is a dominant source of flicker noise 126. In particular, the first stage of the ADC 125 can be a dominant source of flicker noise 126. Typically, the filter circuit 124 includes high-pass filters with a high enough cut-off frequency to ensure very low frequencies (for example below 1kHz) are sufficiently suppressed, including noise produced by amplifiers such as the LNA 122 and amplifiers within the filter circuit 124, for example baseband amplifiers. However, the ADC 125 flicker noise 126 is not removed by these filters 125 and, as a result, reduces the SNR at low distance & low velocity. The ADC 125 noise contribution cannot be filtered out with conventional means (such as a band pass filter or a high pass filter placed after the ADC 125 in the receiver circuit 120) because such conventional means can result in transient settling properties that disrupt the signal and also affect the SNR.

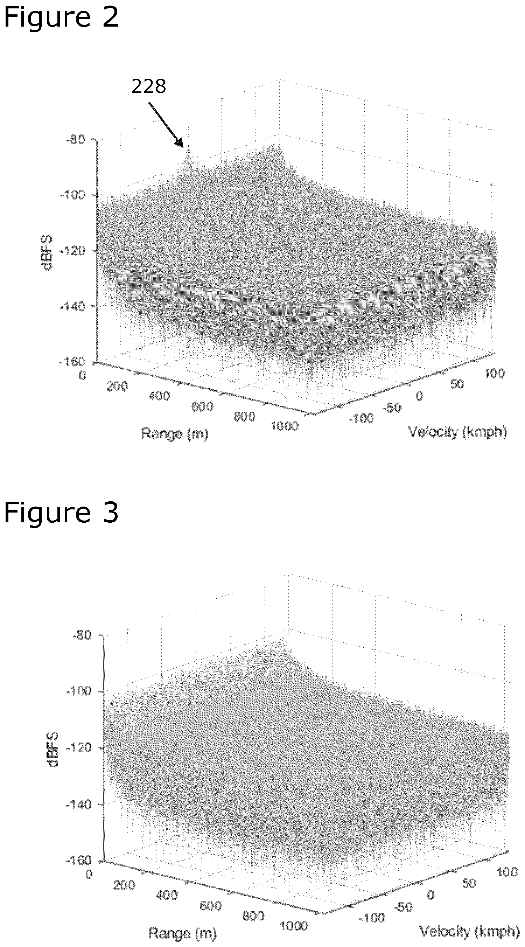

Figures 2 and 3 show the impact of the ADC flicker noise by way of a 2-dimensional (2D) distance-velocity fast-Fourier transform (FFT) plot. The vertical axes of the graphs are amplitude in dBFS (decibels relative to full scale). The axes that define the horizontal plane relate to range in metres and velocity in kilometres per hour. Such 2D distance-velocity FFT plots are known in the art.

Figure 2 shows the result of a 2D distance-velocity FFT for a case with relatively high flicker noise. Figure 3 shows the result of a 2D distance-velocity FFT for a case with relatively low flicker noise. This effect occurs due to noise at frequencies below the frequency bin size of the first FFT (the distance FFT). Therefore, this noise only becomes apparent after applying the second FFT (the velocity FFT). As is apparent from the figures, the loss of SNR in this part of the distance-velocity plot gives rise to a deterioration of performance for very nearby objects. This is especially true for very nearby objects with a very low velocity in the case of relatively high flicker noise, which is identified in Figure 2 with reference number 228. This can present a problem for implementations with sensor blockage detection procedures, for example.

In order to detect nearby influences on the radar sensor, it is important to ensure a sufficiently high SNR for very low frequencies, including those below the frequency bin size of the 1st FFT (the distance FFT). One approach to reduce an ADC's flicker noise for nearby detection is to apply polarity switching (chopping) of active devices in the first stage of the ADC. In some examples, chopping active devices in the first stage and second stage (not shown) of the ADC also reduces the ADC's flicker noise. This is because active devices in the second stage may contribute a non-negligible amount of flicker noise to the overall noise from the ADC. Where multiple input stages / processing blocks are chopped: the first and second processing block input terminals are the input terminals of the first processing block / input stage; and the first and second processing block output terminals are the output terminals of the last processing block / input stage that is being chopped. In particular to apply chopping around flicker noise sensitive circuits within the ADC. However, the introduction of chopping is not necessarily transparent to the operation of modulators and can lead to a considerably increased design complexity. This is especially true in the case of a continuous-time sigma-delta ADC, for example.

The frequency of the noise responsible for the SNR degradation at zero-velocity and zero-distance is (in some cases, far) below the frequency associated with the acquisition time (1/Tacq) used in the radar system. This provides the opportunity to counteract the ADC flicker noise by applying techniques on a time-grid given by Tacq, avoiding the need for a far more troublesome high-frequency chopping in the ADC. The rate of such high-frequency chopping, if it were related to the rate at which the quantisation is taking place, could be several orders of magnitude larger than the chirp frequency of the system. This would lead to a greatly increased complexity and power consumption of the ADC

More specifically, the inventors have found that the impact of the ADC flicker noise can be reduced by changing the polarity of the differential signalling around the noise sensitive circuit at the much lower chirp frequency. As will be discussed in detail below, examples of this can be performed including using a repetitive sequence of alternating polarity (slow-time chopping) and using a random pattern (slow-time randomisation). The most optimal removal of flicker noise by chopping is when each polarity, on average, contributes the same amount of signal. Advantageously, this can provide a more ideal and lower cost solution for DC-offset drift handling than chopping performed at a (much) higher frequency.

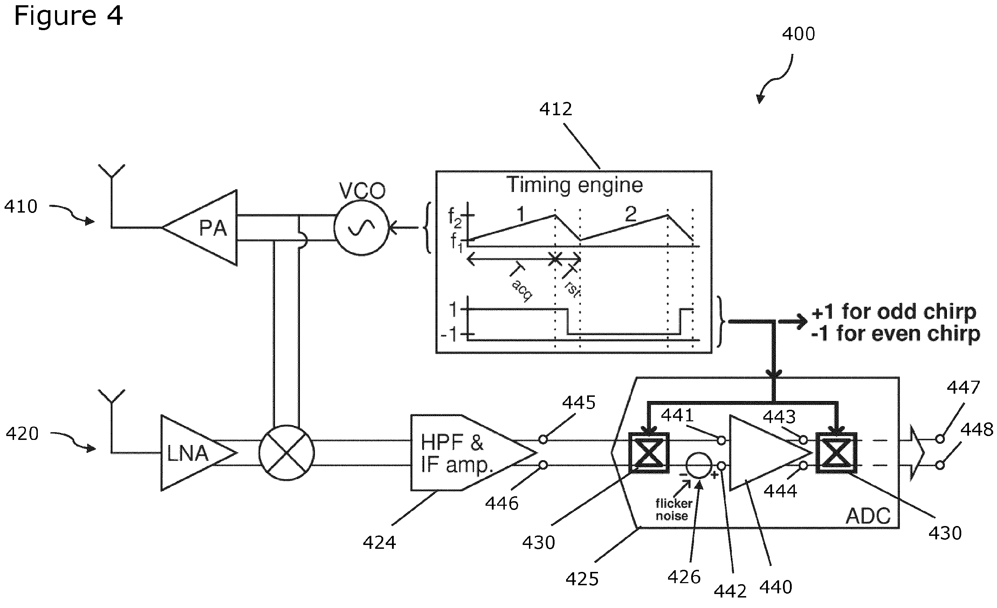

Figure 4 shows an FMCW radar system 400 according to an embodiment of the present disclosure. The FMCW radar system 400 includes a transmitter circuit 410, configured to transmit FMCW chirps at a chirp frequency and a receiver circuit 420 which includes a filter circuit 424 and an ADC 425. The FMCW radar system 400 may include a timing engine 412 configured to define the chirp frequency.

In this embodiment, the ADC 425 includes a processing block 440 with first and second processing block input terminals 441, 442 and first and second processing block output terminals 443, 444. The filter circuit 424 includes first and second filter output terminals 445, 446, and the receiver circuit includes first and second receiver output terminals 447, 448. In this embodiment, each of the above-mentioned terminals are configured to receive differential signalling.

The FMCW radar system 400 also includes a switching circuit 430 operable to selectively put the receiver circuit 420 in one of a first configuration (represented by +1 in the figure) and a second configuration (represented by -1 in the figure). Within the context of the embodiments described within this disclosure, the word "configuration" refers to different internal configurations of the ADC, not different configurations of the FMCW radar system when considered at a block level as shown in the figures. That is, the terminal connections described below are made within the ADC. In other embodiments, the terminal connections are made outside of the ADC.

In some embodiments, the timing engine also provides a timing signal (represented by a binary signal in the lower half of the timing engine 412) that is usable by the switching circuit to selectively put the receiver circuit in one of the first configuration and the second configuration at the switching frequency.

When the receiver circuit 420 is in the first configuration:
- the first filter output terminal 445 is connected to the first processing block input terminal 441;
- the second filter output terminal 446 is connected to the second processing block input terminal 442;
- the first processing block output terminal 443 is connected to the first receiver output terminal 447; and
- the second processing block output terminal 444 is connected to the second receiver output terminal 448.

When the receiver circuit 420 is in the second configuration:
- the first filter output terminal 445 is connected to the second processing block input terminal 442;
- the second filter output terminal 446 is connected to the first processing block input terminal 441;
- the first processing block output terminal 443 is connected to the second receiver output terminal 448; and
- the second processing block output terminal 444 is connected to the first receiver output terminal 447.

The switching circuit 430 is configured to set the configuration of the receiver circuit 420 at a switching frequency, wherein the switching frequency is based on the chirp frequency. This can be advantageous because the FMCW radar system 400 is able to use the timing engine 412 (which is also used for other circuit functions, including the generation of chirps as described above) to control the switching circuit 430, thereby eliminating the need to introduce additional circuit elements. This can result in lower complexity and reduced power consumption.

In some embodiments, the switching frequency is equal to the chirp frequency. In some other embodiments, the switching frequency is a multiple of the chirp frequency. For example, the multiplication factor may be an integer or a fraction. In any case, beneficially, the switching frequency may be less than the sampling frequency of the ADC. In some examples, the switching frequency is 2, 3, 4, 5 or 6 orders of magnitude less than the sampling frequency of the ADC. For example, the ADC may have a sampling frequency of ~1GHz, and the sampling frequency may be ~10kHz. Because fewer switches need to be made within the same period of time, the power consumption of the switching circuit is improved when compared with a switching circuit which is configured to operate at the sampling frequency of the ADC.

The switching circuit 430 may be configured to selectively put the receiver circuit 420 in one of the first configuration and the second configuration during the reset phase Trst of the transmitter circuit 410. Beneficially, this means that the signalling which is processed by the FMCW radar system to determine the distance to and / or velocity of a detected object is not affected by the switching circuit changing the configuration of the receiver circuit 420. In some examples, the switching circuit 430 may be configured to selectively put the receiver circuit 420 in one of the first configuration and the second configuration during the acquisition phase Tacq of the transmitter circuit.

In this embodiment, the switching circuit 430 is configured to alternately put the receiver circuit 420 in the first configuration and the second configuration at the switching frequency or at a multiple of the switching frequency. An example in which the switching circuit 430 alternately changes the configuration at the switching frequency is represented by the plot in the lower half of the timing engine 412 (which, as indicated above, is an example of a timing signal that is usable by the switching circuit 430 to selectively put the receiver circuit in one of the two configurations). In another example, the switching circuit 430 may be configured to alternately put the put the receiver circuit 420 in the first configuration for a time period defined by two FMCW chirps and then to put the receiver circuit 420 into the second configuration for a time period defined by a further two FMCW chirps. This could be represented by +1, +1, -1, -1, +1, +1 ....

In other embodiments, the switching circuit 430 may be configured to randomly or pseudo-randomly put the receiver circuit 420 in one of the first configuration and the second configuration at the switching frequency. In this way, the switching circuit 430 can effectively average out the low-frequency noise across low-range FFT bins. An example of this random switching could be represented by +1, +1, -1, +1, -1, -1, -1 ....

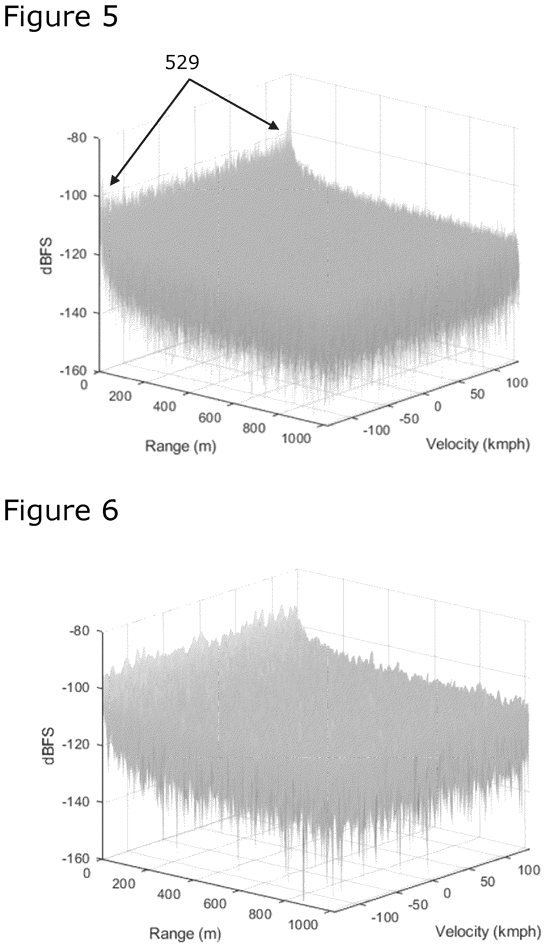

Figures 5 and 6 show the impact of the above-described processing techniques on a 2-dimensional (2D) distance-velocity FFT plot. Figure 5 shows the 2D distance-velocity FFT plot after processing with the slow-time chopping technique, according to an embodiment of the present disclosure. Figure 6 shows the 2D distance-velocity FFT plot after processing with the slow-time randomisation technique, according to an embodiment of the present disclosure.

Turning to Figure 5, in the case of slow-time chopping, the differential polarity alternating from chirp to chirp has the consequence that, the noise energy that was previously concentrated around the zero-distance-low-velocity bins (as shown in Figure 2) gets translated to zero-distance-high-velocity, as shown with reference number 529. Switching the differential polarity of one or more ADC processing block(s) at a frequency as low as 1/(Tacq+Trst) leads to a frequency translation of DC and low frequency contents to f=1/(Tacq+Trst) and odd multiples, thus introducing unwanted spectral component falling inside the band of interest. This is shown in Figure 5 by the peaks at the low-range, high-velocity bins identified by reference number 529. Therefore, one might think that switching the differential polarity of the ADC processing block(s) at such a frequency would be undesirable. However, in FMCW radar applications, it has been found that the combination of content at zero-distance and high-velocity is not particularly relevant because it has no strong physical meaning.

Turning now to Figure 6, in the case of slow-time randomisation, the noise energy that was previously concentrated around the zero-distance-low-velocity bins becomes distributed over all zero-distance velocity bins. This process can also result in an increase in signal noise across all bins, thereby reducing SNR when compared with the slow-time chopping technique.

The advantage in SNR obtained by applying slow-time chopping is expressed by the numbers shown in Table 1. The advantage in SNR obtained by applying slow-time randomisation is expressed by the numbers shown in Table 2. Tc in the table relates to the period of one chirp.

**Table 1: SNR improvement at the zero-distance-zero-velocity bin when using slow-time chopping**

| | **Tc = 12.8us** | **Tc = 25.6us** | **Tc = 51.2us** |
|---|---|---|---|
| 32 chirps | 10.9dB | 21.6dB | 31.2dB |
| 128 chirps | 35.4dB | 39.7dB | 42.3dB |
| 512 chirps | 46.6dB | 46.9dB | 48.9dB |

**Table 2: SNR improvement at the zero-distance-zero-velocity bin when using slow-time randomisation**

| | **Tc = 12.8us** | **Tc = 25.6us** | **Tc = 51.2us** |
|---|---|---|---|
| 32 chirps | 5.7dB | 6.1dB | 8.4dB |
| 128 chirps | 13.4dB | 11.4dB | 12.2dB |
| 512 chirps | 17.6dB | 15.8dB | 15.2dB |

As is clear from the tables, slow-time chopping is more effective than slow-time randomisation in general, but this technique also results in an increase of noise around zero-distance-max-velocity. The optimal technique can therefore be selected based on implementation requirements.

The results listed in the above tables are the outcome of a MATLAB^{™} study, so they are presented with limited implementation loss. Assumed here is a noise profile from a simulated receiver circuit where the low-frequency flicker noise has been artificially increased to reach a noise level which is typically considered to be an issue. 100 chirp sequences (=frames) were generated consisting of only the noise from the receiver circuit. The average change of the zero-distance-zero-velocity bin power spectral density (PSD) was also considered, both with and without applying the above-described techniques.

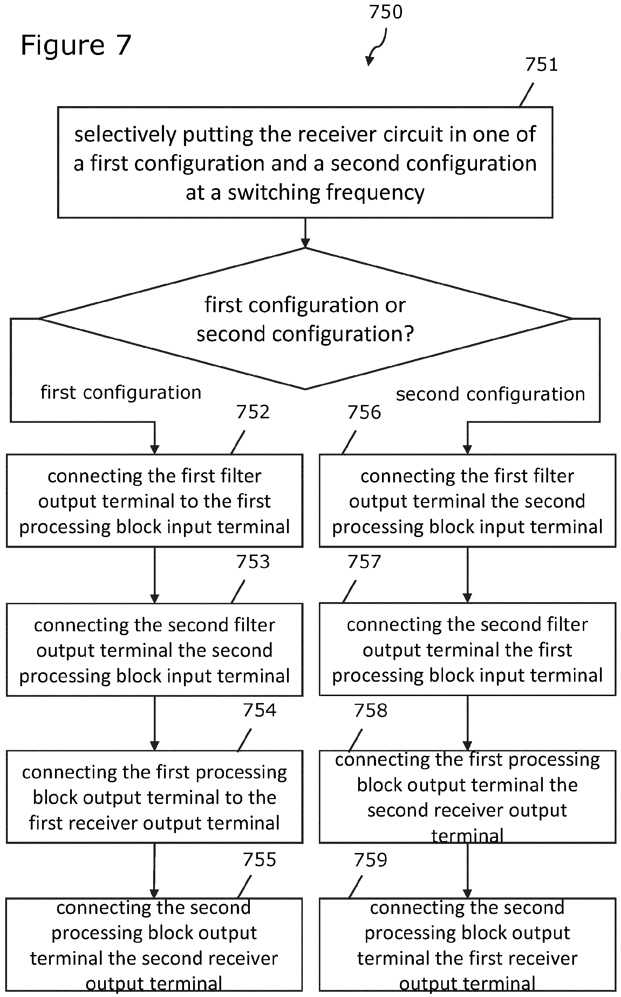

Figure 7 shows a method 750 for operating an FMCW radar system, according to an embodiment of the present disclosure. The method 750 is for operating an FMCW radar system which includes a transmitter circuit which is configured to transmit FMCW chirps at a chirp frequency and a receiver circuit with first and second receiver output terminals. As discussed in detail above, the receiver circuit includes a filter circuit with first and second filter output terminals, an ADC with a processing block which has first and second processing block input terminals and first and second processing block output terminals.

The method 750 includes selectively putting 751 the receiver circuit in one of a first configuration and a second configuration at a switching frequency. As discussed above, the switching frequency is based on the chirp frequency.

When the receiver circuit is put in the first configuration, the method comprises:
- connecting 752 the first filter output terminal to the first processing block input terminal;
- connecting 753 the second filter output terminal the second processing block input terminal;
- connecting 754 the first processing block output terminal to the first receiver output terminal; and
- connecting 755 the second processing block output terminal the second receiver output terminal;

When the receiver circuit is put in the second configuration, the method comprises:
- connecting 756 the first filter output terminal the second processing block input terminal;
- connecting 757 the second filter output terminal the first processing block input terminal;
- connecting 758 the first processing block output terminal the second receiver output terminal; and
- connecting 759 the second processing block output terminal the first receiver output terminal.

As described above, the method 751 may include alternately putting the receiver circuit in the first configuration and the second configuration at the switching frequency or at a multiple of the switching frequency, or the method 751 may include randomly or pseudo-randomly putting the receiver circuit in one of the first configuration and the second configuration at the switching frequency.

The instructions and/or flowchart steps in the above figures can be executed in any order, unless a specific order is explicitly stated. Also, those skilled in the art will recognise that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A frequency modulated continuous wave, FMCW, radar system comprising:
a transmitter circuit, configured to transmit FMCW chirps at a chirp frequency;
a receiver circuit with first and second receiver output terminals, the receiver circuit comprising:
a filter circuit with first and second filter output terminals;
an analogue to digital converter, ADC, comprising a processing block with first and second processing block input terminals, and with first and second processing block output terminals; and
a switching circuit operable to selectively put the receiver circuit in one of a first configuration and a second configuration, wherein:
when the receiver circuit is in the first configuration:
the first filter output terminal is connected to the first processing block input terminal;
the second filter output terminal is connected to the second processing block input terminal;
the first processing block output terminal is connected to the first receiver output terminal; and
the second processing block output terminal is connected to the second receiver output terminal;
when the receiver circuit is in the second configuration:
the first filter output terminal is connected to the second processing block input terminal;
the second filter output terminal is connected to the first processing block input terminal;
the first processing block output terminal is connected to the second receiver output terminal; and
the second processing block output terminal is connected to the first receiver output terminal; and
the switching circuit is configured to set the configuration of the receiver circuit at a switching frequency, wherein the switching frequency is based on the chirp frequency.

2. The FMCW radar system of claim 1, wherein the switching circuit is configured to alternately put the receiver circuit in the first configuration and the second configuration at the switching frequency.

3. The FMCW radar system of claim 1, wherein the switching circuit is configured to alternately put the receiver circuit in the first configuration and the second configuration at a multiple of the switching frequency.

4. The FMCW radar system of claim 1, wherein the switching circuit is configured to randomly put the receiver circuit in one of the first configuration and the second configuration at the switching frequency.

5. The FMCW radar system of claim 1, wherein the switching circuit is configured to pseudo-randomly put the receiver circuit in one of the first configuration and the second configuration at the switching frequency.

6. The FMCW radar system of any preceding claim, wherein the transmission apparatus comprises a timing engine configured to define the chirp frequency of the transmitter circuit.

7. The FMCW radar system of claim 6, wherein the timing engine is also configured to provide a timing signal that is usable by the switching circuit to selectively put the receiver circuit in one of the first configuration and the second configuration at the switching frequency.

8. The FMCW radar system of any preceding claim, wherein the switching frequency is equal to the chirp frequency.

9. The FMCW radar system of any of claims 1-7, wherein the switching frequency is a multiple of the chirp frequency.

10. The FMCW radar system of any preceding claim, wherein the switching circuit is configured to selectively put the receiver in one of the first configuration and the second configuration during a reset phase of the transmitter circuit.

11. The FMCW radar system of claim 10, further comprising a voltage-controlled oscillator, VCO, configured to generate the FMCW chirps, and wherein the timing engine is configured to define an acquisition phase and the reset phase of the transmitter circuit, such that:
during the acquisition phase, the VCO is configured to increase the frequency of an output signal from a first frequency to a second frequency; and
during the reset phase, the VCO is configured to decrease the frequency of the output signal from the second frequency to the first frequency; wherein
the FMCW chirp is defined by the output signal over the course of one acquisition phase and one reset phase.

12. The FMCW radar system of any preceding claim wherein the processing block comprises one or more of: an amplifier circuit; one or more input-stages; and a loop filter.

13. A method for operating a frequency modulated continuous wave, FMCW, radar system, the FMCW radar system comprising:
a transmitter circuit, configured to transmit FMCW chirps at a chirp frequency;
a receiver circuit with first and second receiver output terminals, the receiver circuit comprising:
a filter circuit with first and second filter output terminals;
an ADC comprising a processing block with first and second processing block input terminals, and with first and second processing block output terminals;
the method comprising:
selectively putting the receiver circuit in one of a first configuration and a second configuration at a switching frequency, wherein the switching frequency is based on the chirp frequency, wherein:
when the receiver circuit is put in the first configuration, the method comprises:
connecting the first filter output terminal to the first processing block input terminal;
connecting the second filter output terminal the second processing block input terminal;
connecting the first processing block output terminal to the first receiver output terminal; and
connecting the second processing block output terminal the second receiver output terminal;
when the receiver circuit is put in the second configuration, the method comprises:
connecting the first filter output terminal the second processing block input terminal;
connecting the second filter output terminal the first processing block input terminal;
connecting the first processing block output terminal the second receiver output terminal; and
connecting the second processing block output terminal the first receiver output terminal.

## Amended claims

### Amended claims in accordance with Rule 137(2) EPC.

1. A frequency modulated continuous wave, FMCW, radar system (400) comprising:
a transmitter circuit (410), configured to transmit FMCW chirps at a chirp frequency;
a receiver circuit (420) with first and second receiver output terminals (447, 448), the receiver circuit comprising:
a filter circuit (424) with first and second filter output terminals (445, 446);
an analogue to digital converter, ADC, (425) comprising a processing block (440) with first and second processing block input terminals (441, 442), and with first and second processing block output terminals (443, 444); and
a switching circuit (430) operable to selectively put the receiver circuit (420) in one of a first configuration and a second configuration, wherein:
when the receiver circuit (420) is in the first configuration:
the first filter output terminal (445) is connected to the first processing block input terminal (441);
the second filter output terminal (446) is connected to the second processing block input terminal (442);
the first processing block output terminal (443) is connected to the first receiver output terminal (447); and
the second processing block output terminal (444) is connected to the second receiver output terminal (448);
when the receiver circuit (420) is in the second configuration:
the first filter output terminal (445) is connected to the second processing block input terminal (442);
the second filter output terminal (446) is connected to the first processing block input terminal (441);
the first processing block output terminal (443) is connected to the second receiver output terminal (448); and
the second processing block output terminal (444) is connected to the first receiver output terminal (447); and
the switching circuit (430) is configured to set the configuration of the receiver circuit (420) at a switching frequency, wherein the switching frequency is based on the chirp frequency.

2. The FMCW radar system (400) of claim 1, wherein the switching circuit (430) is configured to alternately put the receiver circuit (420) in the first configuration and the second configuration at the switching frequency.

3. The FMCW radar system (400) of claim 1, wherein the switching frequency is a multiple of the chirp frequency with a multiplication factor which is a fraction, such that the switching frequency is less than the sampling frequency.

4. The FMCW radar system (400) of claim 1, wherein the switching circuit (430) is configured to randomly put the receiver circuit (420) in one of the first configuration and the second configuration at the switching frequency.

5. The FMCW radar system (400) of claim 1, wherein the switching circuit (430) is configured to pseudo-randomly put the receiver circuit (420) in one of the first configuration and the second configuration at the switching frequency.

6. The FMCW radar system (400) of any preceding claim, further comprises a timing engine (412) configured to define the chirp frequency of the transmitter circuit (410).

7. The FMCW radar system (400) of claim 6, wherein the timing engine (412) is also configured to provide a timing signal that is usable by the switching circuit (430) to selectively put the receiver circuit (420) in one of the first configuration and the second configuration at the switching frequency.

8. The FMCW radar system (400) of any preceding claim, wherein the switching circuit (430) is configured to selectively put the receiver circuit (420) in one of the first configuration and the second configuration during a reset phase of the transmitter circuit (410).

9. The FMCW radar system (400) of claim 8, further comprising a voltage-controlled oscillator, VCO, (111) configured to generate the FMCW chirps, and wherein the timing engine (412) is configured to define an acquisition phase and the reset phase of the transmitter circuit (410), such that:
during the acquisition phase, the VCO (111) is configured to increase the frequency of an output signal from a first frequency to a second frequency; and
during the reset phase, the VCO (111) is configured to decrease the frequency of the output signal from the second frequency to the first frequency; wherein
the FMCW chirp is defined by the output signal over the course of one acquisition phase and one reset phase.

10. A method (750) for operating a frequency modulated continuous wave, FMCW, radar system (400), the FMCW radar system comprising:
a transmitter circuit (410), configured to transmit FMCW chirps at a chirp frequency;
a receiver circuit (420) with first and second receiver output terminals, the receiver circuit comprising:
a filter circuit (424) with first and second filter output terminals (447, 448);
an ADC (425) comprising a processing block (440) with first and second processing block input terminals (441, 442), and with first and second processing block output terminals (443, 444);
the method comprising:
selectively putting (751) the receiver circuit (420) in one of a first configuration and a second configuration at a switching frequency, wherein the switching frequency is based on the chirp frequency, wherein:
when the receiver circuit (420) is put in the first configuration, the method comprises:
connecting (752) the first filter output terminal (445) to the first processing block input terminal (441);
connecting (753) the second filter output terminal (446) the second processing block input terminal (442);
connecting (754) the first processing block output terminal (443) to the first receiver output terminal (447); and
connecting (755) the second processing block output terminal (444) the second receiver output terminal (448);
when the receiver circuit (420) is put in the second configuration, the method comprises:
connecting (756) the first filter output terminal (445) the second processing block input terminal (442);
connecting (757) the second filter output terminal (446) the first processing block input terminal (441);
connecting (758) the first processing block output terminal (443) the second receiver output terminal (448); and
connecting (759) the second processing block output terminal (444) the first receiver output terminal (447).
